(19) Europäisches Patentamt
European Patent Office
Office européen des brevets

(11) EP 4 685 258 A1

(12) **EUROPEAN PATENT APPLICATION**
published in accordance with Art. 153(4) EPC

(43) Date of publication:
28.01.2026 Bulletin 2026/05

(21) Application number: 24774991.4

(22) Date of filing: 22.03.2024

(51) International Patent Classification (IPC):
C22C 38/00 (2006.01)    B21C 37/06 (2006.01)
C21D 9/08 (2006.01)    C22C 19/05 (2006.01)
C22C 30/00 (2006.01)    C22C 30/02 (2006.01)
C22C 38/38 (2006.01)    C22C 38/58 (2006.01)
C22C 38/60 (2006.01)    C22F 1/00 (2006.01)
C22F 1/10 (2006.01)    C22F 1/16 (2006.01)

(52) Cooperative Patent Classification (CPC):
B21C 37/06; C21D 9/08; C22C 19/05; C22C 30/00;
C22C 30/02; C22C 38/00; C22C 38/38;
C22C 38/58; C22C 38/60; C22F 1/00; C22F 1/10;
C22F 1/16

(86) International application number:
PCT/JP2024/011266

(87) International publication number:
WO 2024/195857 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 JP 2023045921

(71) Applicant: NIPPON STEEL CORPORATION
Chiyoda-ku
Tokyo 100-8071 (JP)

(72) Inventors:
• TAKIGUCHI Masayuki
  Tokyo 100-8071 (JP)
• TANAKA Katsuki
  Tokyo 100-8071 (JP)
• SETO Masahiro
  Tokyo 100-8071 (JP)
• OSUKI Takahiro
  Tokyo 100-8071 (JP)
• HAMAGUCHI Tomoaki
  Tokyo 100-8071 (JP)

(74) Representative: Zimmermann & Partner
Patentanwälte mbB
P.O. Box 330 920
80069 München (DE)

(54) **DOUBLE TUBE**

(57) A composite tube having a rib, and having an inner tube consisting of ferritic steel and an outer tube consisting of austenitic steel, wherein a chemical composition of the inner tube contains, in mass%: C: 0.01 to 0.30%, Si: 0.01 to 0.80%, Mn: 0.01 to 2.00%, P: 0.030% or less, S: 0.0100% or less, Cr: 0.01 to 3.50%, Al: 0.050% or less, N: 0.0005 to 0.0500%, and the balance: Fe and impurities, and a chemical composition of the outer tube contains, in mass%: C: 0.10% or less, Si: 0.01 to 0.80%, Mn: 0.01 to 3.50%, P: 0.040% or less, S: 0.0100% or less, Ni: 5.0 to 70.0%, Cr: 15.0 to 35.0%, Al: 1.500% or less, N: 0.001 to 0.350%, and the balance: Fe and impurities.

EP 4 685 258 A1

FIGURE 1

(a)

(b)

**Description**

TECHNICAL FIELD

The present invention relates to a composite tube.

BACKGROUND ART

For water wall tubes of power generation boilers, a rifled tube may be used, which has a plurality of grooves (hereinafter also referred to as "ribs") on the inside of the tube, for example, as described in Patent Document 1. By using a rifled tube for water wall tubes, swirl flow will be induced in fluid in the tube, so that thermal conductivity increases. As a result, boiler efficiency improves.

LIST OF PRIOR ART DOCUMENT

PATENT DOCUMENT

Patent Document 1: JP2006-272392A

SUMMARY OF INVENTION

TECHNICAL PROBLEM

The inside of a water wall tube is not a significantly corrosive environment because only water flows therethrough. On the other hand, a higher corrosion resistance is required for the outside of the tube, for example, when it is in an environment that is corrosive because matters such as chloride are airborne. The rifled tube described above is generally made of a steel what is called ferritic steel, which is slightly inferior in corrosion resistance. Accordingly, more studies are still necessary from the viewpoint of corrosion resistance.

In this connection, it is also conceivable to obtain a rifled tube by subjecting an austenitic steel, which has a good corrosion resistance, to rib machining. However, austenitic steel may suffer from stress-corrosion cracking when it is used in an environment in which it comes into contact with water, and the steel has a problem of being less amenable to machining due to its high strength. In addition, austenitic steel is more expensive than ferritic steel, which increases production costs. Accordingly, it is desirable for the rifled tube to be a composite tube (hereinafter also referred to as "rifled composite tube"), in which only the outer tube is of austenitic steel and the inner tube is of ferritic steel and rib-machined. However, a problem of difficulty in smoothly producing composite tubes arises in an attempt to produce the tubes.

An objective of the present invention is to solve the above-described problems and provide a composite tube that has a rib inside.

SOLUTION TO PROBLEM

The gist of the present invention, which has been made to solve the above-described problems, is a composite tube described below.

(1) A composite tube having a rib, and having an inner tube consisting of ferritic steel and an outer tube consisting of austenitic steel, wherein

a chemical composition of the inner tube contains, in mass%:

C: 0.01 to 0.30%,
Si: 0.01 to 0.80%,
Mn: 0.01 to 2.00%,
P: 0.030% or less,
S: 0.0100% or less,
Cr: 0.01 to 3.50%,
Al: 0.050% or less,
N: 0.0005 to 0.0500%, and

the balance: Fe and impurities, and
a chemical composition of the outer tube contains, in mass%:

C: 0.10% or less,
Si: 0.01 to 0.80%,
Mn: 0.01 to 3.50%,
P: 0.040% or less,
S: 0.0100% or less,
Ni: 5.0 to 70.0%,
Cr: 15.0 to 35.0%,
Al: 1.500% or less,
N: 0.001 to 0.350%, and

the balance: Fe and impurities.

(2) A composite tube having a rib, and having an inner tube consisting of ferritic steel and an outer tube consisting of austenitic steel, wherein

a chemical composition of the inner tube contains, in mass%:

C: 0.01 to 0.30%,
Si: 0.01 to 0.80%,
Mn: 0.01 to 2.00%,
P: 0.030% or less,
S: 0.0100% or less,
Cr: 0.01 to 3.50%,
Al: 0.050% or less,
N: 0.0005 to 0.0500%,

one or more elements selected from a group A below, and
the balance: Fe and impurities, and
a chemical composition of the outer tube contains, in mass%:

C: 0.10% or less,
Si: 0.01 to 0.80%,
Mn: 0.01 to 3.50%,
P: 0.040% or less,
S: 0.0100% or less,
Ni: 5.0 to 70.0%,
Cr: 15.0 to 35.0%,
Al: 1.500% or less,
N: 0.001 to 0.350%,

one or more elements selected from a group B below, and
the balance: Fe and impurities:

[group A] Ni: 1.5% or less, Cu: 1.0% or less, Mo: 3.0% or less, W: 3.0% or less, V: 0.50% or less, Nb: 0.10% or less, Ti: 0.30% or less, B: 0.0200% or less, Co: 0.50% or less, Ca: 0.050% or less, Sb: 0.20% or less;
[group B] Cu: 5.00% or less, Nb: 5.00% or less, Ti: 1.0% or less, B: 0.010% or less, W: 10.0% or less, Co: 15.0% or less, Ca: 0.010% or less.

(3) A composite tube having a rib, and having an inner tube consisting of ferritic steel and an outer tube consisting of austenitic steel, wherein

a chemical composition of the inner tube contains, in mass%:

C: 0.01 to 0.30%,
Si: 0.01 to 0.80%,

Mn: 0.01 to 2.00%,
P: 0.030% or less,
S: 0.0100% or less,
Cr: 0.01 to 3.50%,
Al: 0.050% or less,
N: 0.0005 to 0.0500%,

one or more elements selected from a group A below, and
the balance: Fe and impurities, and
a chemical composition of the outer tube contains, in mass%:

C: 0.10% or less,
Si: 0.01 to 0.80%,
Mn: 0.01 to 3.50%,
P: 0.040% or less,
S: 0.0100% or less,
Ni: 5.0 to 70.0%,
Cr: 15.0 to 35.0%,
Al: 1.500% or less,
N: 0.001 to 0.350%,

one or more elements selected from a group B below, and
the balance: Fe and impurities:

[group A] Ni: 1.0% or less, Cu: 1.0% or less, Mo: 3.0% or less, W: 3.0% or less, V: 0.50% or less, Nb: 0.10% or less, Ti: 0.30% or less, B: 0.0200% or less, Co: 0.50% or less, Ca: 0.050% or less, Sb: 0.20% or less;
[group B] Cu: 5.00% or less, Nb: 5.00% or less, Ti: 1.0% or less, B: 0.010% or less, W: 10.0% or less, Co: 15.0% or less, Ca: 0.010% or less.

(4) The composite tube according to any one of the above (1) to (3), wherein

a ferrite content of the inner tube is 40% or more in area fraction,
a hardness of the inner tube is 180 HV or less in Vickers hardness, and
a hardness of the outer tube is 250 HV or less in Vickers hardness.

(5) The composite tube according to any one of the above (1) to (4), wherein a difference between the hardness of the outer tube in a carburized region and the hardness of the inner tube is 200 HV or less in Vickers hardness.

(6) The composite tube according to any one of the above (1) to (5), wherein a shear-tensile stress between the inner tube and the outer tube is 200 MPa or more.

ADVANTAGEOUS EFFECTS OF INVENTION

According to the present invention, it is possible to obtain a composite tube that has a rib inside.

BRIEF DESCRIPTION OF DRAWINGS

[Figure 1] Figure 1 shows schematic diagrams of a rifled composite tube; the view (a) is a schematic diagram of a C-section (cross section); and the view (b) is a schematic diagram of an L-section.
[Figure 2] Figure 2 is a schematic diagram of a specimen for use when a shear-tensile stress is measured.

DESCRIPTION OF EMBODIMENTS

The inventors have conducted studies on rifled composite tubes and obtained the following findings (a) to (d).

(a) When a starting material for the inner tube is too hard, it is difficult to perform rifle machining. Accordingly, to limit the hardness, it is necessary to control the chemical composition of the ferritic steel for the inner tube into a predetermined range. The chemical composition of the austenitic steel for the outer tube may be determined as necessary in accordance with corrosion resistance required for the outer tube.

(b) When the composite tube is to be produced, hot extrusion and the like is performed on a starting material, which is assembled by inserting a solid billet of the ferritic steel for the inner tube into a hollow billet of the austenitic steel for the outer tube, to produce a mother tube. The resultant mother tube is subjected to rifle machining and the like to obtain a rifled composite tube. That is, the production of the rifled composite tube needs to be carried out until the final process is completed while an outer tube part of the mother tube (hereinafter simply referred to as "mother tube of outer-tube") and an inner tube part of the mother tube (hereinafter simply referred to as "mother tube of inner-tube") are in a combined state.

(c) When rifle machining is to be performed, heat treatment may be performed in order to increase workability. In this case, the heat treatment needs to be carried out while the mother tube of the outer-tube and the mother tube of the inner-tube, which are of dissimilar starting materials, are in a combined state. Accordingly, to increase workability and efficiently carry out rifle machining, it is preferable to perform heat treatment suitable for both the mother tube of the outer-tube and the mother tube of the inner-tube. Specifically, it is preferable to perform three-stepped heat treatments of a solution treatment, normalization, and tempering.

In the solution treatment, for the main purpose of softening the mother tube of the outer-tube, the treatment temperature is preferably in the range of 1000 to 1200°C. In the normalization, for the purpose of controlling the microstructure of the mother tube of the inner-tube and increasing the ferrite content, the treatment temperature is preferably in the range of 850 to 950°C. Furthermore, in the tempering, for the purpose of softening the mother tube of the inner-tube, the treatment temperature is preferably in the range of 750 to 800°C. As a result, workability can be more facilitated during rifle machining.

(d) Furthermore, after the three-stepped heat treatments, it is also effective to perform additional normalization. The reason is that it further increases the shear stress between the outer tube and the inner tube, so that separation during rifle machining can be prevented. Through the solution treatment, the normalization, and the tempering described above, C contained in the mother tube of the inner-tube moves to the side of the mother tube of the outer-tube, forming a C-concentrated region at the interface on the side of the mother tube of the outer-tube. Such a C-concentrated region has an increased hardness, and therefore, a difference in hardness between the C-concentrated region and the mother tube of the inner-tube increases. As a result, the shear-tensile stress tends to degrade, and separation may occur. Accordingly, it is worth performing the additional normalization to eliminate the concentration of C.

An embodiment of the present invention has been made based on the findings described above. The requirements for the embodiment will now be described in detail.

1. Configuration of Composite Tube

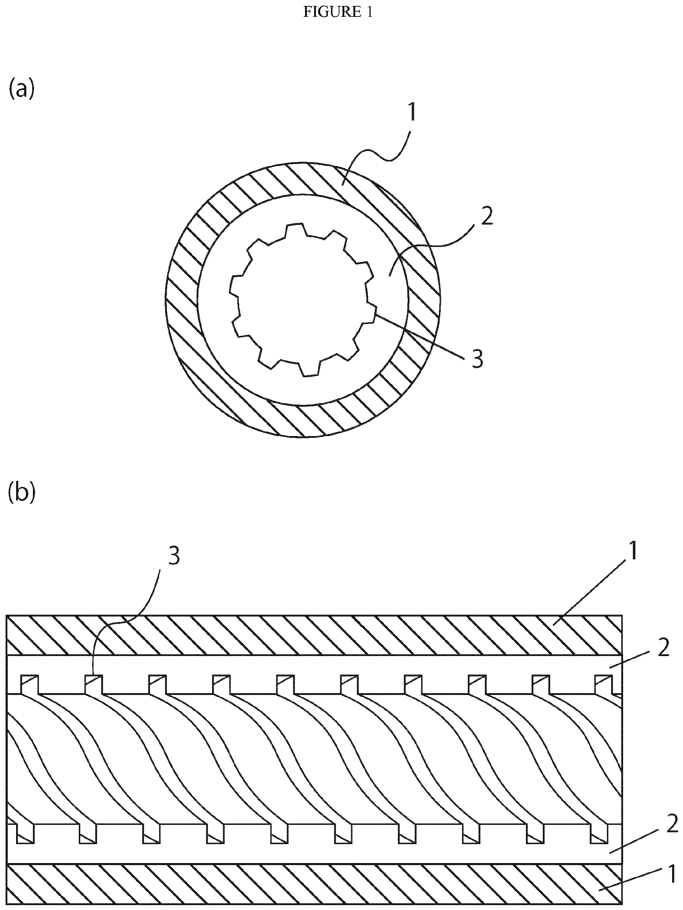

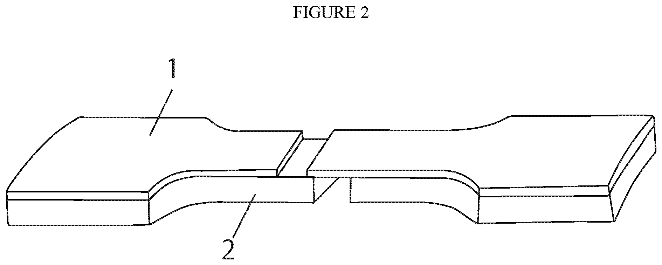

Figure 1 shows diagrams schematically depicting a composite tube of the embodiment: the view (a) of Figure 1 is a diagram schematically depicting a section that is perpendicular to the longitudinal direction of the tube (also referred to as "C-section or a cross section"); the view (b) of Figure 2 is a diagram schematically depicting a section that is parallel to the longitudinal direction of the tube (also referred to as "L-section").

As illustrated in the views (a) and (b) of Figure 1, the composite tube of the embodiment is a composite tube that includes an inner tube 2 and an outer tube 1. The composite tube of the embodiment is produced in such a way that hot extrusion and the like is performed on a starting material, which is assembled by inserting a solid billet of the ferritic steel for the inner tube into a hollow billet of the austenitic steel for the outer tube, to produce a mother tube, followed by finishing drawing and the like on the resultant mother tube. Consequently, the inner tube and the outer tube are adhered. That is, the composite tube is what is called a composite tube in which the outer tube is joined to the inner tube.

Furthermore, as illustrated in the views (a) and (b) of Figure 1, the composite tube of the embodiment is provided with a rib 3 on the inside of the inner tube, that is, on a hollow region side. While the shape of the rib is not particularly limited, for example, a plurality of helical ribs is often employed when assuming a use in water wall tubes.

2. Chemical Composition of Composite Tube

2-1. Chemical Composition of Steel of Inner Tube

As described above, the composite tube of the embodiment includes the inner tube and the outer tube. The inner tube consists of ferritic steel. Here, the ferritic steel refers basically to steel that contains a ferritic microstructure, and the ferritic steel includes, for example, carbon steel, low-alloy steel, and ferritic heat resisting steel. The carbon steel includes, for example, STB410 and the like, and the low-alloy steel includes, for example, STBA22. However, the steel grades described above are not a limitation, and any ferritic steel that satisfies the chemical composition described later is considered sufficient.

For the chemical composition of the inner tube, a specific range of content of each element will now be described. Note that in the description below, "%" for the content refers to "mass%".

C: 0.01 to 0.30%

C (carbon) increases hardenability and is an element that is effective for increasing the stability of the microstructure. Furthermore, C forms carbide and contributes to the improvement of strength. Accordingly, the content of C is 0.01% or more. The content of C is preferably 0.05% or more, and more preferably 0.10% or more. However, excessively contained C leads to hardening of the starting material, making rib machining difficult. Accordingly, the content of C is 0.30% or less. The content of C is preferably 0.28% or less, and more preferably 0.26% or less.

Si: 0.01 to 0.80%

Si (silicon) produces a deoxidation effect and is an element that is effective for improving corrosion resistance at high temperature and oxidation resistance. Accordingly, the content of Si is 0.01% or more. The content of Si is preferably 0.05% or more, and more preferably 0.10% or more. However, excessively contained Si leads to hardening of the starting material, making rib machining difficult. Accordingly, the content of Si is 0.80% or less. The content of Si is preferably 0.60% or less, and more preferably 0.40% or less.

Mn: 0.01 to 2.00%

Mn (manganese) is an element that produces a deoxidation effect as in Si and is an element that is effective for increasing hardenability and increasing the stability of the microstructure. Accordingly, the content of Mn is 0.01% or more. The content of Mn is preferably 0.05% or more, and more preferably 0.10% or more. However, excessively contained Mn leads to hardening of the starting material, making rib machining difficult. It also leads to creep embrittlement and the degradation of toughness. Accordingly, the content of Mn is 2.00% or less. The content of Mn is preferably 1.80% or less, and more preferably 1.60% or less.

P: 0.030% or less

P (phosphorus) is contained as impurities in the steel and is an element that causes the degradation of mechanical properties. Accordingly, the content of P is 0.030% or less. The content of P is preferably 0.028% or less, and more preferably 0.025% or less. While it is preferable that the content of P is lowered as much as possible, excessive reduction leads to an increase in steelmaking costs. Accordingly, the content of P is preferably 0.0005% or more.

S: 0.0100% or less

S (sulfur) is contained as impurities in the steel as in P and is an element that causes the degradation of mechanical properties. Accordingly, the content of S is 0.0100% or less. The content of S is preferably 0.0080% or less, and more preferably 0.0050% or less. While it is preferable that the content of S is lowered as much as possible, excessive reduction leads to an increase in steelmaking costs. Accordingly, the content of S is preferably 0.0001% or more.

Cr: 0.01 to 3.50%

Cr (chromium) produces an effect of securing oxidation resistance and high-temperature corrosion resistance and stabilizing the microstructure. Accordingly, the content of Cr is 0.01% or more. The content of Cr is preferably 0.10% or more, and more preferably 0.50% or more. However, excessively contained Cr leads to hardening of the starting material, making rib machining difficult. It also leads to the degradation of the stability of carbide and also the degradation of toughness. Accordingly, the content of Cr is 3.50% or less. The content of Cr is preferably 3.20% or less, and more preferably 3.00% or less.

Al: 0.050% or less

Al (aluminum) is an element that produces a deoxidation effect, whereas when contained excessively, it leads to hardening of the starting material, making rib machining difficult. The toughness also degrades. Accordingly, the content of Al is 0.050% or less. The content of Al is preferably 0.045% or less, and more preferably 0.040% or less. On the other hand, to obtain the above-described effects, the content of Al is preferably 0.0005% or more.

N: 0.0005 to 0.0500%

N (nitrogen) is combined with V, Nb, and Ti to form fine nitride and is an element that is effective for the improvement of strength. Accordingly, the content of N is 0.0005% or more. The content of N is preferably 0.0008% or more, and more preferably 0.0010% or more. However, excessively contained N leads to hardening of the starting material, making rib machining difficult. It also leads to the excessive precipitation of nitride and the degradation of toughness. Accordingly, the content of N is 0.0500% or less. The content of N is preferably 0.0450% or less, more preferably 0.0400% or less, and further preferably 0.0300% or less, 0.0200% or less, 0.0150%, or 0.0100% or less.

In addition to the elements described above, one or more elements selected from the following group A (Ni, Cu, Mo, W, V, Nb, Ti, B, Co, Ca, and Sb) may be contained. That is, the lower limit of any of the elements is 0%. The reason for limitation for each element will now be described.

Ni: 1.5% or less

Ni (nickel) contributes to the improvement of strength. Accordingly, Ni may be contained as necessary. However, excessively contained Ni leads to hardening of the starting material, making rib machining difficult. Accordingly, the content of Ni is 1.5% or less. The content of Ni is preferably 1.4% or less, more preferably 1.3% or less, and further preferably 1.0% or less, 0.8% or less, or 0.6% or less. On the other hand, to obtain the above-described effects, the content of Ni is preferably 0.01% or more.

Cu: 1.0% or less

Cu (copper) contributes to the improvement of strength. Accordingly, Cu may be contained as necessary. However, excessively contained Cu leads to hardening of the starting material, making rib machining difficult. Accordingly, the content of Cu is 1.0% or less. The content of Cu is preferably 0.90% or less, and more preferably 0.80% or less. On the other hand, to obtain the above-described effects, the content of Cu is preferably 0.01% or more.

When one or more elements selected from Ni and Cu described above are contained, the following Formula (i) is preferably satisfied:

$$0.01 \leq Ni + Cu \leq 2.5 \quad ... \quad (i)$$

where each element symbol in the formula represents a content (in mass%) of each element contained in the steel and is zero when the element is not contained.

The reason is that the strength increase is facilitated by keeping the middle value of Formula (i), which is a total content of Ni and Cu, at 0.01% or more. Accordingly, the middle value of Formula (i) is preferably 0.01% or more. The middle value of Formula (i) is more preferably 0.02% or more and further preferably 0.03% or more.

On the other hand, when the middle value of Formula (i) exceeds 1.0%, the starting material is hardened, which may make rib machining difficult. Accordingly, the middle value of Formula (i) is preferably 2.5% or less. The middle value of Formula (i) is more preferably 2.3% or less, and further preferably 2.0% or less, 1.5% or less, 1.0% or less, 0.9% or less, or 0.8% or less.

Mo: 3.0% or less

Mo (molybdenum) leads to solid-solution strengthening of the matrix and produces an effect of improving strength. Accordingly, Mo may be contained as necessary. However, excessively contained Mo leads to hardening of the starting material, making rib machining difficult. Accordingly, the content of Mo is 3.0% or less. The content of Mo is preferably 2.8% or less, and more preferably 2.5% or less, 2.0% or less, 1.5% or less, 1.3% or less, or 1.2% or less. On the other hand, to obtain the above-described effects, the content of Mo is preferably 0.01% or more.

W: 3.0% or less

W (tungsten) leads to solid-solution strengthening of the matrix and produces an effect of improving strength. Accordingly, W may be contained as necessary. However, excessively contained W leads to hardening of the starting material, making rib machining difficult. Accordingly, the content of W is 3.0% or less. The content of W is preferably 2.8% or less, and more preferably 2.5% or less, 2.0% or less, 1.5% or less, 1.0% or less, 0.8% or less, or 0.5% or less. On the other hand, to obtain the above-described effects, the content of W is preferably 0.01% or more.

When one or more elements selected from Mo and W described above are contained, the following Formula (ii) is preferably satisfied:

$$0.01 \leq Mo+W \leq 3.0 \quad \ldots \quad (ii)$$

where each element symbol in the formula represents a content (in mass%) of each element contained in the steel and is zero when the element is not contained.

Keeping the middle value of Formula (ii), which is a total content of Mo and W, at 0.01% or more leads to solid-solution strengthening of the matrix, facilitating the strength improvement. Accordingly, the middle value of Formula (ii) is preferably 0.01% or more. The middle value of Formula (ii) is more preferably 0.03% or more, and further preferably 0.05% or more.

On the other hand, when the middle value of Formula (ii) exceeds 3.0%, the starting material is hardened, which may make rib machining difficult. Accordingly, the middle value of Formula (ii) is preferably 3.0% or less. The middle value of Formula (ii) is more preferably 2.8% or less, and further preferably 2.5% or less, 2.0% or less, 1.5% or less, or 1.3% or less.

V: 0.50% or less

V (vanadium) forms fine carbonitride and contributes to the improvement of strength. Accordingly, V may be contained as necessary. However, excessively contained V leads to hardening of the starting material, making rib machining difficult. It also leads to the precipitation of V as a large amount of carbide, leading to the degradation of toughness. Accordingly, the content of V is 0.50% or less. The content of V is preferably 0.45% or less, and more preferably 0.40% or less, 0.30% or less, or 0.20% or less. On the other hand, to obtain the above-described effects, the content of V is preferably 0.01% or more.

Nb: 0.10% or less

Nb (niobium) forms fine carbonitride as in V and contributes to the improvement of strength. Accordingly, Nb may be contained as necessary. However, excessively contained Nb leads to hardening of the starting material, making rib machining difficult. It also leads to the precipitation of Nb as a large amount of carbonitride, leading to the degradation of toughness. Accordingly, the content of Nb is 0.10% or less. The content of Nb is preferably 0.09% or less, and more preferably 0.08% or less, or 0.05% or less. On the other hand, to obtain the above-described effects, the content of Nb is preferably 0.005% or more.

Ti: 0.30% or less

Ti (titanium) precipitates within the grains as fine carbonitride and contributes to the improvement of strength. Furthermore, Ti inhibits coarsening of the grains in a welding heat affected zone, and thereby indirectly prevents cold cracking. Accordingly, Ti may be contained as necessary. However, excessively contained Ti leads to hardening of the starting material, making rib machining difficult. It also leads to the precipitation as a large amount of carbonitride as in V or Nb, leading to the degradation of toughness. Accordingly, the content of Ti is 0.30% or less. The content of Ti is preferably 0.28% or less, and more preferably 0.25% or less, 0.20% or less, 0.15% or less, 0.10% or less, 0.08% or less, or 0.05% or less. On the other hand, to obtain the above-described effects, the content of Ti is preferably 0.0005% or more.

B: 0.0200% or less

B (boron) produces an effect of lowering cold cracking susceptibility. Furthermore, even a trace amount of B increases hardenability of the steel and produces an effect of stabilizing the microstructure. Accordingly, B may be contained as necessary. However, excessively contained B leads to hardening of the starting material, making rib machining difficult. Furthermore, it also segregates in grain boundaries in the welding heat affected zone when subjected to welding, so that liquation cracking is likely to occur. Accordingly, the content of B is 0.0200% or less. The content of B is preferably 0.0180% or less, and more preferably 0.0150% or less, 0.0100% or less, 0.0080% or less, or 0.0050% or less. On the other hand, to obtain the above-described effects, the content of B is preferably 0.0001% or more.

Co: 0.50% or less

Co (cobalt) produces an effect of improving high-temperature strength. Accordingly, Co may be contained as necessary. However, excessively contained Co leads to the degradation of workability. Production costs also increase. Accordingly, the content of Co is 0.50% or less. The content of Co is preferably 0.40% or less, and more preferably 0.30% or less. On the other hand, to obtain the above-described effects, the content of Co is preferably 0.0001% or more.

Ca: 0.050% or less

Ca (calcium) produces an effect of improving ductility at high temperature. Accordingly, Ca may be contained as necessary. However, excessively contained Ca leads to the degradation of cleanliness of steel. Accordingly, the content of Ca is 0.050% or less. The content of Ca is preferably 0.040% or less, and more preferably 0.030% or less. On the other hand, to obtain the above-described effects, the content of Ca is preferably 0.0001% or more.

Sb: 0.20% or less

Sb (antimony) produces an effect of improving high-temperature strength. Accordingly, Sb may be contained as necessary. However, excessively contained Sb leads to the degradation of weldability and toughness. Accordingly, the content of Sb is 0.20% or less. The content of Sb is preferably 0.19% or less, and more preferably 0.18% or less. On the other hand, to obtain the above-described effects, the content of Sb is preferably 0.0001% or more.

In the chemical composition of the inner tube, the balance is Fe and impurities. Here, "impurities" refer to components that are introduced due to various factors in raw materials such as ore and scrap and production processes when the ferritic steel is industrially produced and that are acceptable to the extent that they do not adversely affect the embodiment. Note that while one of the impurities is, for example, O (oxygen), the content of O is preferably 0.01% or less.

2-2. Chemical Composition of Steel of Outer Tube

The outer tube consists of austenitic steel. Here, austenitic steel refers basically to steel that contains an austenitic microstructure, and the austenitic steel includes, for example, austenitic heat-resistant steel. The austenitic heat-resistant steel includes, for example, SUS304LTB, (Japanese METI) 310J1TB, and the like. However, the steel grades described above are not a limitation, and any austenitic steel that satisfies the chemical composition described later is considered sufficient. The corrosion resistance in an environment in which matters such as chloride are airborne can be secured with any austenitic steel to the extent that, for example, it has the chemical composition described later.

For the chemical composition of the outer tube, a specific range of content of each element will now be described. Note that in the description below, "%" for the content refers to "mass%" as in the inner tube.

C: 0.10% or less

C (carbon) produces an effect of improving strength and high-temperature strength, whereas when contained excessively, it leads to the degradation of mechanical properties such as ductility and toughness, and corrosion resistance. Accordingly, the content of C is 0.10% or less. The content of C is preferably 0.06% or less, and preferably 0.03% or less. On the other hand, to obtain the above-described effects, the content of C is preferably 0.003% or more.

Si: 0.01 to 0.80%

Si (silicon) is an element that produces a deoxidation effect. Furthermore, Si is an element that is effective for improving oxidation resistance, steam oxidation resistance, and the like. Accordingly, the content of Si is 0.01% or more. The content of Si is preferably 0.05% or more, and more preferably 0.1% or more. However, excessively contained Si promotes the precipitation of an intermetallic compound phase such as a σ phase and leads to the degradation of the structural stability at high temperature and also the degradation of corrosion resistance. The weldability also degrades. Accordingly, the content of Si is 0.80% or less. The content of Si is preferably 0.75% or less, and is preferably 0.70% or less.

Mn: 0.01 to 3.50%

Mn (manganese) produces an effect of increasing strength. Accordingly, the content of Mn is 0.01% or more. The content of Mn is preferably 0.05% or more, and more preferably 0.10% or more. However, excessively contained Mn promotes the precipitation of an intermetallic compound phase such as a σ phase and leads to the degradation of the structural stability, high-temperature strength, and mechanical properties. Accordingly, the content of Mn is 3.50% or less.

The content of Mn is preferably 3.40% or less, and is preferably 3.3% or less.

P: 0.040% or less

P (phosphorus) is contained as impurities in the steel and is an element that causes the degradation of mechanical properties. Accordingly, the content of P is 0.040% or less. The content of P is preferably 0.035% or less, and more preferably 0.030% or less. While it is preferable that the content of P is lowered as much as possible, excessive reduction leads to an increase in steelmaking costs. Accordingly, the content of P is preferably 0.0005% or more.

S: 0.0100% or less

S (sulfur) is contained as impurities in the steel as in P and is an element that causes the degradation of mechanical properties. Accordingly, the content of S is 0.0100% or less. The content of S is preferably 0.0080% or less, and more preferably 0.0050% or less. While it is preferable that the content of S is lowered as much as possible, excessive reduction leads to an increase in steelmaking costs. Accordingly, the content of S is preferably 0.0001% or more.

Ni: 5.0 to 70.0%

Ni (nickel) is an element that stabilizes the microstructure in the austenitic steel and produces an effect of improving corrosion resistance. An effect of improving strength is also produced. Accordingly, the content of Ni is 5.0% or more. The content of Ni is preferably 6.0% or more, and more preferably 7.0% or more. However, excessively contained Ni compromises weldability and the economic efficiency. Accordingly, the content of Ni is 70.0% or less. The content of Ni is preferably 69.0% or less, more preferably 68.0% or less, and further preferably 65.0% or less.

Cr: 15.0 to 35.0%

Cr (chromium) produces an effect of improving oxidation resistance, corrosion resistance, and the like. Accordingly, the content of Cr is 15.0% or more. The content of Cr is preferably 15.5% or more, and more preferably 16.0% or more. However, excessively contained Cr makes the microstructure unstable. The weldability also degrades. Accordingly, the content of Cr is 35.0% or less. The content of Cr is preferably 34.0% or less, and more preferably 33.0% or less.

Al: 1.500% or less

Al (aluminum) is an element that produces a deoxidation effect, whereas when contained excessively, it leads to the precipitation of a large number of nonmetallic inclusions, leading to the degradation of mechanical properties. Accordingly, the content of Al is 1.500% or less. The content of Al is preferably 1.400% or less, and more preferably 1.300% or less. On the other hand, to obtain the above-described effects, the content of Al is preferably 0.0005% or more.

N: 0.001 to 0.350%

N (nitrogen) forms nitride along with V, Nb, and the like and produces an effect of improving strength and high-temperature strength. An effect of stabilizing an austenitic microstructure is also produced. Accordingly, the content of N is 0.001% or more. The content of N is preferably 0.002% or more, and more preferably 0.003% or more. However, when N is excessively contained, nitride is excessively formed, so that mechanical properties degrade. Accordingly, the content of N is 0.350% or less. The content of N is preferably 0.340% or less, and more preferably 0.330% or less.

In addition to the elements described above, one or more elements selected from the following group B (Cu, Nb, Ti, B, W, Co, W, and Ca) may be contained. That is, the lower limit of any of the elements is 0%. The reason for limitation for each element will now be described.

Cu: 5.00% or less

Cu (copper) produces an effect of improving high-temperature strength and corrosion resistance. Accordingly, Cu may be contained as necessary. However, excessively contained Cu leads to the degradation of workability. Accordingly, the content of Cu is 5.00% or less. The content of Cu is preferably 4.00% or less, and more preferably 3.50% or less. On the other hand, to obtain the above-described effects, the content of Cu is preferably 0.0001% or more.

Nb: 5.00% or less

Nb (niobium) produces an effect of improving high-temperature strength. Accordingly, Nb may be contained as necessary. However, excessively contained Nb leads to the degradation of workability. Accordingly, the content of Nb is 5.00% or less. The content of Nb is preferably 4.80% or less, and more preferably 4.50% or less. On the other hand, to obtain the above-described effects, the content of Nb is preferably 0.0001% or more.

Ti: 1.0% or less

Ti (titanium) produces an effect of improving corrosion resistance. Accordingly, Ti may be contained as necessary. However, excessively contained Ti leads to an increase in production costs. Accordingly, the content of Ti is 1.0% or less. The content of Ti is preferably 0.90% or less, and more preferably 0.80% or less. On the other hand, to obtain the above-described effects, the content of Ti is preferably 0.0001% or more.

B: 0.010% or less

B (boron) produces an effect of improving corrosion resistance. Accordingly, B may be contained as necessary. However, excessively contained B leads to the degradation of hot workability. Accordingly, the content of B is 0.010% or less. The content of B is preferably 0.009% or less, and more preferably 0.008% or less. On the other hand, to obtain the above-described effects, the content of B is preferably 0.0001% or more.

W: 10.0% or less

W (tungsten) produces an effect of improving high-temperature strength. Accordingly, W may be contained as necessary. However, excessively contained W leads to the degradation of hot workability. Accordingly, the content of W is 10.0% or less. The content of W is preferably 9.5% or less, and more preferably 9.0% or less. On the other hand, to obtain the above-described effects, the content of W is preferably 0.0001% or more.

Co: 15.0% or less

Co (cobalt) produces an effect of improving high-temperature strength. Accordingly, Co may be contained as necessary. However, excessively contained Co leads to the degradation of workability. Production costs also increase. Accordingly, the content of Co is 15.0% or less. The content of Co is preferably 14.0% or less, and more preferably 13.0% or less. On the other hand, to obtain the above-described effects, the content of Co is preferably 0.0001% or more.

Ca: 0.010% or less

Ca (calcium) produces an effect of improving ductility at high temperature. Accordingly, Ca may be contained as necessary. However, excessively contained Ca leads to the degradation of cleanliness of steel. Accordingly, the content of Ca is 0.010% or less. On the other hand, to obtain the above-described effects, the content of Ca is preferably 0.0001% or more.

In the chemical composition of the outer tube, the balance is Fe and impurities. Here, "impurities" refer to components that are introduced due to various factors in raw materials such as ore and scrap and production processes when the austenitic steel is industrially produced and that are acceptable to the extent that they do not adversely affect the embodiment. Note that while one of the impurities is, for example, O (oxygen), the content of O is preferably 0.01% or less.

3. Microstructure of Inner Tube

As described above, the inner tube consists of ferritic steel. Accordingly, the microstructure of the ferritic steel is not particularly limited. However, in the microstructure, the ferrite content is preferably 40% or more in area fraction. Here, the ferrite content refers to the ratio of ferrite in the microstructure, and when the ferrite content is 40% or more in area fraction, better workability is exhibited, and rib machining is facilitated. The ferrite content is more preferably 45% or more in area fraction, and further preferably 50% or more. The upper limit of the ferrite content is not particularly defined. The higher the ferrite content is, the better.

The ferrite content may be calculated through microstructural observation. In the microstructural observation, samples are collected such that an inner tube cross section (a section perpendicular to the longitudinal direction) is an observation surface. Then, the observation surface is subjected to mirror polishing, followed by etching in Nital, and a photograph is taken with an optical microscope at the magnification of $100\times$ such that the center of the wall thickness coincides with the center of the observation visual field. In the photograph, a portion exhibiting a single white color is determined as ferrite. Thereafter, the ratio of the portions of single white color to the entire observation visual field is calculated as the ferrite content.

## 4. Hardness

### 4-1. Hardness of Inner Tube

The hardness of the inner tube is preferably 180 HV or less in Vickers hardness. When the hardness of the inner tube is 180 HV or less, better workability is exhibited, and finishing drawing described later is facilitated. As a result, the yield of the composite tube is improved. Accordingly, the hardness of the inner tube is preferably 180 HV or less in Vickers hardness, more preferably 175 HV or less, and further preferably 170 HV or less.

The hardness of the inner tube is measured according to the procedure described below. Specifically, specimens are collected from a cross section of the inner tube. On the collected specimen, hardness tests are conducted at three points under a load of 10 kgf at a wall-thickness center of the inner tube, and an average value of them is determined as the hardness of the inner tube. In the hardness test, a Vickers hardness tester may be used. Furthermore, in the hardness measurement, measurements are taken at a distance as necessary to avoid influence among measurement points. Other specific conditions may be in compliance with JIS Z 2244-1:2020.

### 4-2. Hardness of Outer Tube

The hardness of the outer tube is preferably 250 HV or less in Vickers hardness. In the composite tube of the embodiment, the hardness of the inner tube of 180 HV or less can be achieved through the three-stepped heat treatments as described later, whereas in this case, the hardness of the outer tube, which is also subjected to the heat treatment, reaches 250 HV or less. Accordingly, the hardness of the outer tube is preferably 250 HV or less in Vickers hardness, more preferably 240 HV or less, and further preferably 230 HV or less.

The hardness of the outer tube is measured according to the procedure described below. Specifically, specimens are collected from a cross section of the outer tube. On the collected specimen, hardness tests are conducted at three points under a load of 10 kgf at a wall-thickness center of the outer tube, and an average value of them is determined as the hardness of the outer tube. That is, measurements are taken as in the inner tube.

### 4-3. Difference between Hardness of Outer Tube in Carburized Region and Hardness of Inner Tube

As described above, through the three-stepped heat treatments of the solution treatment, the normalization, and the tempering, C contained in the mother tube of the inner-tube moves to the side of the outer tube, forming a C-concentrated region at the interface on the side of the mother tube of the outer-tube. The region is referred to as a carburized region. In the composite tube of the embodiment, the carburized region is defined as a region from the interface between the outer tube and the inner tube up to 80 $\mu$m in the outer circumference direction when the cross section of the composite tube is observed. The reason is that C is likely to be concentrated in the region from the interface between the outer tube and the inner tube up to 80 $\mu$m. When C is concentrated in the carburized region and the hardness locally increases, the difference in hardness between the inner tube and the outer tube increases and the shear-tensile stress is lowered to 200 MPa or less, so that separation may be likely to occur. The workability during finishing drawing may also degrade.

Accordingly, the difference between the hardness of the outer tube in the carburized region and the hardness of the inner tube (hereinafter simply denoted as "ΔHV") is preferably 200 HV or less in Vickers hardness. The ΔHV is more preferably 150 HV or less in Vickers hardness. Note that it is preferable that the difference in hardness is lowered as much as possible.

The hardness of the outer tube in the carburized region is determined as an average value of hardness tests conducted at three points in the center of the above-described carburized region, that is, at a position 40 $\mu$m from the interface in the cross section of the composite tube in the outer circumference direction. Note that the load is 100 gf, and other measurement conditions are the same as those for the measurements of the hardness of the inner tube.

## 5. Shear-Tensile Stress

The composite tube used for water wall tubes undergoes a shear-tensile stress due to water flowing inside the inner tube. Accordingly, for the composite tube for the above-described application, it is desirable that the shear-tensile stress is higher. Furthermore, a high shear-tensile stress leads to better workability during finishing drawing in the production. Accordingly, the shear-tensile stress between the inner tube and the outer tube is preferably 200 MPa or more.

The shear-tensile stress between the inner tube and the outer tube is more preferably 300 MPa or more, and further preferably 400 MPa or more.

The shear-tensile stress may be measured according to the procedure described below. A specimen is collected as in Figure 2 such that the longitudinal direction of the composite tube and the longitudinal direction of the specimen coincide with each other. For a parallel portion of the specimen, the width is 10 mm and the length of an adhered portion of the outer tube and the inner tube in the longitudinal direction is 2 mm. The tensile test is conducted by using such a specimen to measure the shear-tensile stress.

6. Production Method

A preferable production method for the composite tube of the embodiment will be described. The composite tube of the embodiment can stably be produced according to the production method described below.

First, a starting material is prepared, which is assembled by inserting a solid billet of the ferritic steel for the inner tube into a hollow billet of the austenitic steel for the outer tube. The austenitic steel for the outer tube preferably satisfies the chemical composition described above. Furthermore, the ferritic steel for the inner tube that satisfies the chemical composition described above is considered sufficient.

6-1. Hot Rolling or Extrusion

Subsequently, the starting material is subjected to hot rolling or extrusion to obtain a mother tube. Hot extrusion, intermediate drawing, and the like are performed in the hot rolling or extrusion. The conditions for hot rolling or extrusion are not particularly limited. Common procedures may be practiced. Through the intermediate drawing, a mother tube in which the inner tube adheres to the inside of the outer tube is obtained.

6-2. Heat Treatment

Subsequently, the hot-rolled mother tube is preferably subjected to a heat treatment. In the heat treatment, it is preferable that a solution treatment is performed first, followed by normalization, and then tempering is performed. In addition, after the tempering, it is more preferable to perform normalization (hereinafter, normalization subsequent to "tempering" is also referred to as "additional normalization"). Hereinunder, each of the heat treatments will specifically be described.

6-2-1. Solution Treatment

When the mother tube is subjected to a heat treatment, it is preferable to perform a solution treatment first. The reason is that the solution treatment makes it easy to soften the mother tube of the outer-tube. This improves producibility and brings about a hardness that leads to the hardness of the outer tube for an end product of 250 HV or less. The heat treatment temperature of the solution treatment is preferably in the range of 1000 to 1200°C. When the heat treatment temperature of the solution treatment is less than 1000°C, the mother tube of the outer-tube is less likely to be softened, and the hardness of the outer tube is likely to be more than 250 HV. This makes finishing drawing difficult. Accordingly, the heat treatment temperature of the solution treatment is preferably 1000°C or more, and more preferably 1050°C or more.

On the other hand, when the heat treatment temperature of the solution treatment exceeds 1200°C, a coarse microstructure is formed, and desired characteristics cannot be obtained. Accordingly, the heat treatment temperature of the solution treatment is preferably 1200°C or less, and more preferably 1190°C or less.

The heat treatment time of the solution treatment is not particularly limited, whereas it is often on the order of 1 to 10 minutes in general.

6-2-2. Normalization

Subsequently, the mother tube subjected to the solution treatment is preferably subjected to normalization. The normalization makes it easy to control the microstructure of the mother tube of the inner-tube. The heat treatment temperature of the normalization is preferably in the range of 850 to 950°C. When the heat treatment temperature of the normalization is less than 850°C, a desired microstructure cannot be obtained. Accordingly, the heat treatment temperature of the normalization is preferably 850°C or more, and more preferably 900°C or more.

On the other hand, when the heat treatment temperature of the normalization exceeds 950°C, the ferrite content of the inner tube of an end product falls down to less than 40%. Along with this, the hardness of the inner tube is likely to be more than 180 HV in Vickers hardness. That is, it makes rib machining difficult, and workability may degrade. Accordingly, the heat treatment temperature of the normalization is preferably 950°C or less, and more preferably 940°C or less.

The heat treatment time of the normalization is not particularly limited, whereas it is often on the order of 1 to 30 minutes in general.

6-2-3. Tempering

Subsequently, the normalized mother tube is preferably subjected to tempering. The reason is that the tempering makes it easy to soften the mother tube of the inner-tube. The heat treatment temperature of the tempering is preferably in the range of 750 to 800°C. The reason is that when the heat treatment temperature of the tempering is less than 750°C, the mother tube of the inner-tube is less likely to be softened, which may make rib machining difficult. In addition, the hardness of the inner tube of an end product exceeds 180 HV. That is, workability may degrade during finishing drawing. Accordingly, the heat treatment temperature of the tempering is preferably 750°C or more.

On the other hand, when the heat treatment temperature of the tempering exceeds 800°C, transformation occurs, and desired characteristics cannot be obtained. Accordingly, the heat treatment temperature of the tempering is preferably 800°C or less.

The heat treatment time of the tempering is not particularly limited, whereas it is often on the order of 1 to 60 minutes in general.

6-2-4. Additional Normalization

Furthermore, the tempered starting material may be subjected to additional normalization as necessary. The heat treatments of the solution treatment, the normalization, and the tempering described above are desirably performed to soften both the mother tube of the inner-tube and the mother tube of the outer-tube for rib machining on the mother tube of the inner-tube. On the other hand, these heat treatments cause C of the mother tube of the inner-tube to be concentrated in the carburized region of the outer tube, leading to a locally increased hardness. As a result, the difference in hardness increases between the mother tube of the inner-tube and the mother tube of the outer-tube. That is, ΔHV may exceed 200. Furthermore, the shear-tensile stress tends to degrade, and workability may degrade during finishing drawing. Here, performing the additional normalization makes it possible to reduce concentration of C described above and to improve the shear-tensile stress.

The heat treatment temperature of the additional normalization is preferably in the range of 850 to 950°C. The reason is that when the heat treatment temperature of the additional normalization is less than 850°C, the concentration of C described above cannot sufficiently be eliminated. As a result, the difference in hardness between the inner tube and the outer tube of an end product increases, so that the shear-tensile stress falls down to less than 200MPa. Accordingly, the heat treatment temperature of the additional normalization is preferably 850°C or more, and more preferably 900°C or more.

On the other hand, when the heat treatment temperature of the additional normalization exceeds 950°C, tempering and therefore hardening occur, which may make finishing drawing described later difficult. Furthermore, the inner tube is hardened, and the ferrite content may degrade. Accordingly, the heat treatment temperature of the additional normalization is preferably 950°C or less, and more preferably 940°C or less.

The heat treatment time of the additional normalization is not particularly limited, whereas it is often on the order of 1 to 60 minutes in general.

6-3. Finishing Drawing

The mother tube undergone the process of the above 6-1, or the mother tube undergone the process of 6-2 after the process of 6-1 as necessary is subjected to finishing drawing, and the mother tube of the inner-tube is subjected to rifle machining. When performing rifle machining, with a tool for cold drawing (hereinafter also referred to as "plug") inserted in the mother tube of the inner-tube, cold drawing is performed by using dies while swaging the mother tube. The shapes of plug and dies are not particularly limited. Selection may be made as necessary depending on the desired rib.

Before rifle machining, lubricant may be applied to portions of the mother tube of the inner-tube and the mother tube of the outer-tube, or they may be degreased as necessary. Furthermore, after finishing drawing, a heat treatment may be performed, or shotblast or the like may be performed as necessary. Through the processes, the composite tube of the embodiment can be obtained.

Hereinunder, the composite tube according to the present invention will specifically be described with reference to examples, whereas the embodiment is not limited to the examples.

EXAMPLE

Starting materials were prepared, each of which is assembled by inserting a solid billet of the ferritic steel that has the chemical composition indicated in Table 1 into a hollow billet of the austenitic steel that has the chemical composition indicated in Table 2. Subsequently, the starting materials were subjected to hot extrusion, intermediate drawing, and the like to obtain mother tubes.

[Table 1]

Table 1

| Inner tube steel No. | Chemical composition of inner tube (mass%, balance: Fe and impurities) | | | | | | | | | | | | | | | | | | | Ni+Cu | Mo+W |
|---|---|---|---|---|---|---|---|---|---|---|---|---|---|---|---|---|---|---|---|---|---|
| | C | Si | Mn | P | S | Cr | Al | N | Ni | Cu | Mo | W | V | Nb | Ti | B | Co | Ca | Sb | | |
| 1 | 0.04 | 0.02 | 0.06 | 0.001 | 0.0020 | 0.02 | 0.036 | 0.0008 | - | - | - | - | - | - | - | - | - | - | - | - | - |
| 2 | 0.11 | 0.21 | 0.44 | 0.008 | 0.0020 | 0.04 | 0.037 | 0.0033 | - | - | - | - | - | - | - | - | 0.020 | - | - | - | - |
| 3 | 0.11 | 0.28 | 1.25 | 0.009 | 0.0020 | 0.11 | 0.041 | 0.0039 | - | - | - | - | - | - | - | - | - | - | - | - | - |
| 4 | 0.11 | 0.30 | 1.27 | 0.011 | 0.0018 | 0.11 | 0.045 | 0.0032 | 0.36 | 0.24 | - | - | - | 0.02 | 0.02 | - | - | 0.002 | - | 0.60 | - |
| 5 | 0.11 | 0.31 | 1.98 | 0.012 | 0.0021 | 0.61 | 0.040 | 0.0030 | - | - | 0.60 | - | - | - | - | - | - | - | - | - | 0.60 |
| 6 | 0.18 | 0.20 | 0.56 | 0.016 | 0.0080 | 0.03 | 0.039 | 0.0038 | - | - | - | - | - | - | - | - | - | - | - | - | - |
| 7 | 0.21 | 0.25 | 0.82 | 0.009 | 0.0080 | 0.04 | 0.004 | 0.0079 | - | - | - | - | - | - | - | - | - | - | - | - | - |
| 8 | 0.26 | 0.31 | 0.11 | 0.009 | 0.0009 | 0.75 | 0.034 | 0.0010 | - | - | 0.90 | - | - | - | - | - | - | - | - | - | 0.90 |
| 9 | 0.26 | 0.27 | 0.82 | 0.015 | 0.0066 | 0.04 | 0.005 | 0.0072 | - | - | - | - | - | 0.01 | - | - | - | - | - | - | - |
| 10 | 0.14 | 0.22 | 0.54 | 0.013 | 0.0050 | 0.89 | 0.005 | 0.0053 | - | - | 0.48 | - | - | - | - | 0.0008 | - | - | - | - | 0.48 |
| 11 | 0.14 | 0.25 | 0.54 | 0.013 | 0.0040 | 1.00 | 0.003 | 0.0039 | - | - | 0.51 | - | - | - | - | 0.0009 | - | - | - | - | 0.51 |
| 12 | 0.13 | 0.60 | 0.48 | 0.014 | 0.0030 | 1.10 | 0.005 | 0.0048 | - | - | 0.48 | - | 0.08 | - | - | 0.0011 | - | - | - | - | 0.48 |
| 13 | 0.16 | 0.17 | 0.47 | 0.014 | 0.0070 | 0.05 | 0.005 | 0.0050 | - | - | 0.48 | - | - | - | - | - | - | - | - | - | 0.48 |
| 14 | 0.05 | 0.21 | 1.07 | 0.010 | 0.0100 | 0.03 | 0.022 | 0.0047 | 0.17 | 0.27 | - | - | - | - | - | - | - | - | 0.090 | 0.44 | - |
| 15 | 0.11 | 0.25 | 0.43 | 0.012 | 0.0030 | 2.07 | 0.007 | 0.0076 | - | - | 0.95 | 0.02 | - | - | - | - | - | - | - | - | 0.97 |
| 16 | 0.12 | 0.75 | 0.47 | 0.014 | 0.0030 | 1.20 | 0.005 | 0.0049 | - | - | 0.49 | - | 0.07 | - | - | 0.0010 | - | - | - | - | 0.48 |
| 17 | 0.10 | 0.25 | 0.44 | 0.013 | 0.0030 | 2.60 | 0.007 | 0.0078 | - | - | 0.95 | 0.02 | - | - | - | - | - | - | - | - | 0.97 |
| 18 | 0.20 | 0.25 | 0.80 | 0.009 | 0.0080 | 0.04 | 0.004 | 0.0131 | - | - | - | - | - | - | - | - | - | - | - | - | - |
| 19 | 0.15 | 0.27 | 0.92 | 0.012 | 0.0090 | 0.22 | 0.006 | 0.0092 | 1.29 | 0.80 | 0.35 | - | - | 0.035 | - | - | - | - | - | 2.09 | - |
| 20 | 0.10 | 0.25 | 0.421 | 0.017 | 0.0005 | <u>8.79</u> | 0.003 | 0.0402 | 0.22 | - | 0.38 | 1.87 | 0.19 | 0.06 | - | 0.0031 | 0.030 | 0.0011 | 0.0003 | 0.22 | 2.25 |
| Underline indicates that the value fell out of the requirements of this embodiment. | | | | | | | | | | | | | | | | | | | | | |

[Table 2]

[Table 2]

Table 2

| Outer tube steel No. | Chemical composition of outer tube (mass%, balance: Fe and impurities) | | | | | | | | | | | | | | | |
|---|---|---|---|---|---|---|---|---|---|---|---|---|---|---|---|---|
| | C | Si | Mn | P | S | Ni | Cr | Al | N | Cu | Nb | Ti | B | W | Co | Ca |
| 1 | 0.02 | 0.40 | 1.51 | 0.022 | 0.0020 | 10.2 | 18.2 | 0.010 | 0.061 | - | - | - | - | - | - | - |
| 2 | 0.02 | 0.30 | 1.78 | 0.030 | 0.0002 | 10.2 | 16.2 | 0.008 | 0.086 | - | - | - | - | - | - | - |
| 3 | 0.04 | 0.40 | 1.54 | 0.027 | 0.0005 | 9.2 | 17.5 | 0.013 | 0.052 | - | 0.65 | - | - | - | - | - |
| 4 | 0.01 | 0.39 | 1.50 | 0.023 | 0.0005 | 9.8 | 17.3 | 0.022 | 0.079 | - | 0.30 | - | 0.002 | - | - | - |
| 5 | 0.01 | 0.19 | 0.82 | 0.017 | 0.0005 | 11.5 | 17.5 | 0.007 | 0.108 | 3.35 | 0.30 | - | 0.010 | - | - | - |
| 6 | 0.02 | 0.70 | 3.20 | 0.026 | 0.0003 | 14.0 | 21.6 | 0.002 | 0.205 | - | - | - | 0.002 | - | - | - |
| 7 | 0.02 | 0.41 | 1.01 | 0.012 | 0.0010 | 25.1 | 22.6 | 0.013 | 0.210 | - | 0.31 | - | 0.003 | - | - | 0.003 |
| 8 | 0.02 | 0.24 | 1.16 | 0.017 | 0.0002 | 20.0 | 25.2 | 0.017 | 0.263 | - | 0.30 | - | 0.002 | - | - | 0.001 |
| 9 | 0.02 | 0.22 | 1.72 | 0.025 | 0.0003 | 13.5 | 24.5 | 0.006 | 0.340 | - | - | - | - | - | - | 0.001 |
| 10 | 0.01 | 0.24 | 0.53 | 0.015 | 0.0002 | 39.8 | 28.8 | 0.001 | 0.157 | - | - | - | - | - | - | 0.002 |
| 11 | 0.09 | 0.04 | 0.79 | 0.002 | 0.0007 | 43.2 | 22.3 | 0.003 | 0.008 | - | 0.25 | 0.10 | 0.002 | 9.5 | - | 0.009 |
| 12 | 0.08 | 0.07 | 0.06 | 0.004 | 0.0005 | 50.0 | 32.0 | 0.100 | 0.010 | - | - | 0.90 | 0.002 | 5.8 | - | 0.001 |
| 13 | 0.06 | 0.10 | 0.05 | 0.003 | 0.0010 | 54.8 | 22.0 | 1.300 | 0.010 | - | - | 0.40 | 0.003 | - | 13.0 | - |
| 14 | 0.02 | 0.10 | 0.14 | 0.012 | 0.0002 | 65.0 | 22.0 | 0.110 | 0.009 | - | 4.20 | 0.20 | - | - | - | - |
| 15 | 0.01 | 0.31 | 0.66 | 0.017 | 0.0010 | 39.0 | 22.6 | 0.120 | 0.007 | 1.82 | - | 0.65 | - | - | - | 0.001 |

EP 4 685 258 A1

19

The resultant mother tubes were subjected to a solution treatment, normalization, tempting, and additional normalization under the conditions indicated in Table 3 as necessary, followed by finishing drawing and rifle matchining on the mother tubes of the inner-tube to obtain rifled composite tubes, each of which includes a rib and includes the inner tube consisting of ferritic steel and the outer tube consisting of austenitic steel. Entries O under "finishing drawing" in Table 3 indicate that the finishing drawing was accomplished successfully, and entries Δ indicate that some of them were able to undergo the finishing drawing even though the yield or the like was unsatisfactory, and those × indicate that the finishing drawing could not be accomplished.

On the resultant rifled composite tubes, the hardness, the ferrite content of the inner tube, and the shear-tensile stress were measured according to the procedure described below.

(Ferrite Content of Inner Tube)

The ferrite content may be calculated through microstructural observation. In the microstructural observation, samples were collected such that an inner tube cross section (a section perpendicular to the longitudinal direction) is an observation surface. Then, the observation surface was subjected to mirror polishing, followed by etching in Nital, and a photograph was taken with an optical microscope at the magnification of 100× such that the center of the wall thickness coincided with the center of the observation visual field. In the photograph, a portion exhibiting a single white color was determined as ferrite. Thereafter, the ratio of the portions of single white color to the entire observation visual field was calculated as the ferrite content.

(Hardness of Inner Tube)

The hardness of the inner tube was measured according to the procedure described below. Specimens were collected from a cross section of the inner tube. On the collected specimen, hardness tests were conducted at three points under a load of 10 kgf at a wall-thickness center of the inner tube, and an average value of them was determined as the hardness of the inner tube. In the hardness test, a Vickers hardness tester was used. Furthermore, in the hardness measurement, measurements were taken at a distance as necessary to avoid influence among measurement points. Other specific conditions were in compliance with JIS Z 2244-1:2020.

(Hardness of Outer Tube)

The hardness of the outer tube was measured according to the procedure described below. Specimens were collected from a cross section of the outer tube. On the collected specimen, hardness tests were conducted at three points under a load of 10 kgf at a wall-thickness center of the outer tube, and an average value of them was determined as the hardness of the outer tube. Other measurement conditions were the same as those for the measurements of the hardness of the inner tube.

(Hardness of Outer Tube in Carburized Region)

The hardness of the outer tube in the carburized region was measured according to the procedure described below. Hardness tests were conducted at three points in the center of the above-described carburized region, that is, at a position 40 μm from the interface in the cross section of the composite tube in the outer circumference direction, and an average value of them was determined as the hardness of the outer tube in the carburized region. Note that the load was 100 gf, and other measurement conditions were the same as those for the measurements of the hardness of the inner tube.

(Shear-Tensile Stress)

The shear-tensile stress may be measured according to the procedure described below. A specimen was collected as in Figure 2 such that the longitudinal direction of the composite tube and the longitudinal direction of the specimen coincided with each other. For a parallel portion of the specimen, the width was 10 mm and the length of an adhered portion of the outer tube and the inner tube in the longitudinal direction was 2 mm. The tensile test was conducted by using such a specimen to measure the shear-tensile stress.

In view of the results from the condition of the finishing drawing, microstructure, hardness, and the difference in hardness, those that did not reach the desired criteria in terms of comprehensive evaluation were denoted as × in the characteristics evaluation, those that were slightly better than × in the characteristics evaluation were denoted as Δ. Furthermore, those that were slightly better than Δ were denoted as ○, and those that were slightly better than ○ as ⊙. Hereinunder, the results are collectively shown in Table 3.

[Table 3]

[Table 3]

Table 3

| Test No. | Inner tube steel No. | Outer tube steel No. | Production condition | | | | | Microstructure | Hardness | Hardness | Difference in hardness | Shear tensile stress (MPa) | Characteristics evaluation | |
|---|---|---|---|---|---|---|---|---|---|---|---|---|---|---|
| | | | Solution treatment (°C) | Normalization (°C) | Tempering (°C) | Additional normalization (°C) | Finishing drawing | Ferrite content of inner tube (%) | Inner tube (HV) | Outer tube (HV) | ΔHV | | | |
| 1 | 1 | 1 | 900 | 920 | 765 | - | △ | 50 | 150 | 260 | 230 | 152 | △ | |
| 2 | 10 | 2 | 1100 | 1100 | 770 | - | △ | 20 | 200 | 220 | 190 | 138 | △ | |
| 3 | 15 | 3 | 1100 | 900 | 720 | - | △ | 45 | 190 | 214 | 200 | 139 | △ | |
| 4 | 4 | 4 | 1120 | 920 | 760 | - | ○ | 50 | 150 | 205 | 250 | 156 | ○ | |
| 5 | 11 | 5 | 1100 | 900 | 770 | 1000 | △ | 25 | 195 | 227 | 195 | 150 | △ | |
| 6 | 2 | 6 | 1100 | 860 | 765 | 860 | ○ | 50 | 170 | 225 | 130 | 402 | ◎ | Inventive example |
| 7 | 3 | 7 | 1120 | 930 | 765 | 930 | ○ | 48 | 175 | 233 | 140 | 421 | ◎ | |
| 8 | 5 | 8 | 1100 | 930 | 770 | 930 | ○ | 48 | 165 | 220 | 140 | 450 | ◎ | |
| 9 | 6 | 9 | 1050 | 920 | 780 | 920 | ○ | 50 | 160 | 235 | 130 | 401 | ◎ | |
| 10 | 7 | 10 | 1100 | 930 | 780 | 930 | ○ | 48 | 170 | 235 | 140 | 450 | ◎ | |
| 11 | 8 | 11 | 1150 | 900 | 765 | 900 | ○ | 55 | 164 | 242 | 165 | 451 | ◎ | |
| 12 | 9 | 12 | 1100 | 950 | 770 | 950 | ○ | 53 | 168 | 239 | 176 | 437 | ◎ | |
| 13 | 12 | 13 | 1180 | 930 | 765 | 930 | ○ | 51 | 173 | 234 | 158 | 453 | ◎ | |
| 14 | 13 | 14 | 1100 | 930 | 750 | 930 | ○ | 52 | 161 | 231 | 144 | 454 | ◎ | |
| 15 | 14 | 15 | 1110 | 920 | 765 | 920 | ○ | 50 | 175 | 241 | 130 | 400 | ◎ | |
| 16 | 16 | 1 | 1100 | 920 | 770 | 920 | ○ | 52 | 168 | 222 | 170 | 420 | ◎ | |
| 17 | 17 | 7 | 1150 | 910 | 765 | 910 | ○ | 51 | 172 | 215 | 168 | 400 | ◎ | |
| 18 | 18 | 13 | 1150 | 900 | 760 | 900 | ○ | 49 | 170 | 220 | 172 | 423 | ◎ | |
| 19 | 19 | 15 | 1100 | 920 | 770 | 920 | ○ | 50 | 170 | 219 | 182 | 436 | ◎ | |

| Test No. | Inner tube steel No. | Outer tube steel No. | Production condition | | | | | Microstructure | Hardness | Hardness | Difference in hardness | Shear tensile stress (MPa) | Characteristics evaluation | |
|---|---|---|---|---|---|---|---|---|---|---|---|---|---|---|
| | | | Solution treatment (°C) | Normalization (°C) | Tempering (°C) | Additional normalization (°C) | Finishing drawing | Ferrite content of inner tube (%) | Inner tube (HV) | Outer tube (HV) | ΔHV | | | |
| 20 | <u>20</u> | 8 | 1100 | 950 | 770 | 950 | × | - | - | - | - | - | × | Comparative example |

Underline indicates that the value fell out of the preferable production condition of double-walled pipe or chemical composition of this embodiment.
Doubleunderline indicates that the value fell out of the requirements of dependent claims.

The tests No. 1 to 15 that satisfied the requirements for the embodiment were Δ or better in the characteristics evaluation. On the other hand, the test No. 16 that did not satisfy the requirements for the embodiment was unable to withstand the finishing drawing, and therefore, failed to obtain the rifled composite tube.

(Appendix)

A composite tube having a rib, and having an inner tube consisting of ferritic steel and an outer tube consisting of austenitic steel, wherein

a chemical composition of the inner tube contains, in mass%:

C: 0.01 to 0.30%,
Si: 0.01 to 0.80%,
Mn: 0.01 to 2.00%,
P: 0.030% or less,
S: 0.0100% or less,
Cr: 0.01 to 3.50%,
Al: 0.050% or less,
N: 0.0005 to 0.0500%,
Ni: 0 to 1.5%,
Cu: 0 to 1.0%,
Mo: 0 to 3.0%,
W: 0 to 3.0%,
V: 0 to 0.50%,
Nb: 0 to 0.10%,
Ti: 0 to 0.30%,
B: 0 to 0.0200%,
Co: 0 to 0.50%,
Ca: 0 to 0.050%,
Sb: 0 to 0.20%, and

the balance: Fe and impurities, and
a chemical composition of the outer tube contains, in mass%:

C: 0.10% or less,
Si: 0.01 to 0.80%,
Mn: 0.01 to 3.50%,
P: 0.040% or less,
S: 0.0100% or less,
Ni: 5.0 to 70.0%,
Cr: 15.0 to 35.0%,
Al: 1.500% or less,
N: 0.001 to 0.350%,
Cu: 0 to 5.00%,
Nb: 0 to 5.00%,
Ti: 0 to 1.0%,
B: 0 to 0.010%,
W: 0 to 10.0%,
Co: 0 to 15.0%,
Ca: 0 to 0.010%, and

the balance: Fe and impurities.

REFERENCE SIGNS LIST

1. outer tube

2. inner tube
3. rib

**Claims**

1. A composite tube having a rib, and having an inner tube consisting of ferritic steel and an outer tube consisting of austenitic steel, wherein

   a chemical composition of the inner tube contains, in mass%:

   C: 0.01 to 0.30%,
   Si: 0.01 to 0.80%,
   Mn: 0.01 to 2.00%,
   P: 0.030% or less,
   S: 0.0100% or less,
   Cr: 0.01 to 3.50%,
   Al: 0.050% or less,
   N: 0.0005 to 0.0500%, and

   the balance: Fe and impurities, and
   a chemical composition of the outer tube contains, in mass%:

   C: 0.10% or less,
   Si: 0.01 to 0.80%,
   Mn: 0.01 to 3.50%,
   P: 0.040% or less,
   S: 0.0100% or less,
   Ni: 5.0 to 70.0%,
   Cr: 15.0 to 35.0%,
   Al: 1.500% or less,
   N: 0.001 to 0.350%, and

   the balance: Fe and impurities.

2. A composite tube having a rib, and having an inner tube consisting of ferritic steel and an outer tube consisting of austenitic steel, wherein

   a chemical composition of the inner tube contains, in mass%:

   C: 0.01 to 0.30%,
   Si: 0.01 to 0.80%,
   Mn: 0.01 to 2.00%,
   P: 0.030% or less,
   S: 0.0100% or less,
   Cr: 0.01 to 3.50%,
   Al: 0.050% or less,
   N: 0.0005 to 0.0500%,

   one or more elements selected from a group A below, and
   the balance: Fe and impurities, and
   a chemical composition of the outer tube contains, in mass%:

   C: 0.10% or less,
   Si: 0.01 to 0.80%,
   Mn: 0.01 to 3.50%,
   P: 0.040% or less,
   S: 0.0100% or less,

Ni: 5.0 to 70.0%,
Cr: 15.0 to 35.0%,
Al: 1.500% or less,
N: 0.001 to 0.350%,

one or more elements selected from a group B below, and
the balance: Fe and impurities:

[group A] Ni: 1.5% or less, Cu: 1.0% or less, Mo: 3.0% or less, W: 3.0% or less, V: 0.50% or less, Nb: 0.10% or less, Ti: 0.30% or less, B: 0.0200% or less, Co: 0.50% or less, Ca: 0.050% or less, Sb: 0.20% or less;
[group B] Cu: 5.00% or less, Nb: 5.00% or less, Ti: 1.0% or less, B: 0.010% or less, W: 10.0% or less, Co: 15.0% or less, Ca: 0.010% or less.

3. A composite tube having a rib, and having an inner tube consisting of ferritic steel and an outer tube consisting of austenitic steel, wherein

a chemical composition of the inner tube contains, in mass%:

C: 0.01 to 0.30%,
Si: 0.01 to 0.80%,
Mn: 0.01 to 2.00%,
P: 0.030% or less,
S: 0.0100% or less,
Cr: 0.01 to 3.50%,
Al: 0.050% or less,
N: 0.0005 to 0.0500%,

one or more elements selected from a group A below, and
the balance: Fe and impurities, and
a chemical composition of the outer tube contains, in mass%:

C: 0.10% or less,
Si: 0.01 to 0.80%,
Mn: 0.01 to 3.50%,
P: 0.040% or less,
S: 0.0100% or less,
Ni: 5.0 to 70.0%,
Cr: 15.0 to 35.0%,
Al: 1.500% or less,
N: 0.001 to 0.350%,

one or more elements selected from a group B below, and
the balance: Fe and impurities:

[group A] Ni: 1.0% or less, Cu: 1.0% or less, Mo: 3.0% or less, W: 3.0% or less, V: 0.50% or less, Nb: 0.10% or less, Ti: 0.30% or less, B: 0.0200% or less, Co: 0.50% or less, Ca: 0.050% or less, Sb: 0.20% or less;
[group B] Cu: 5.00% or less, Nb: 5.00% or less, Ti: 1.0% or less, B: 0.010% or less, W: 10.0% or less, Co: 15.0% or less, Ca: 0.010% or less.

4. The composite tube according to claim 1, wherein

a ferrite content of the inner tube is 40% or more in area fraction,
a hardness of the inner tube is 180 HV or less in Vickers hardness, and
a hardness of the outer tube is 250 HV or less in Vickers hardness.

5. The composite tube according to claim 2, wherein

a ferrite content of the inner tube is 40% or more in area fraction,

a hardness of the inner tube is 180 HV or less in Vickers hardness, and
a hardness of the outer tube is 250 HV or less in Vickers hardness.

6. The composite tube according to claim 3, wherein

a ferrite content of the inner tube is 40% or more in area fraction,
a hardness of the inner tube is 180 HV or less in Vickers hardness, and
a hardness of the outer tube is 250 HV or less in Vickers hardness.

7. The composite tube according to any one of claims 1 to 6, wherein a difference between the hardness of the outer tube in a carburized region and the hardness of the inner tube is 200 HV or less in Vickers hardness.

8. The composite tube according to any one of claims 1 to 6, wherein a shear-tensile stress between the inner tube and the outer tube is 200 MPa or more.

9. The composite tube according to claim 7, wherein a shear-tensile stress between the inner tube and the outer tube is 200 MPa or more.

FIGURE 1

(a)

(b)

FIGURE 2

## INTERNATIONAL SEARCH REPORT

| International application No. |
|---|
| **PCT/JP2024/011266** |

| A. | CLASSIFICATION OF SUBJECT MATTER |
|---|---|

*C22C 38/00*(2006.01)i; *B21C 37/06*(2006.01)i; *C21D 9/08*(2006.01)i; *C22C 19/05*(2006.01)i; *C22C 30/00*(2006.01)i; *C22C 30/02*(2006.01)i; *C22C 38/38*(2006.01)i; *C22C 38/58*(2006.01)i; *C22C 38/60*(2006.01)i; *C22F 1/00*(2006.01)i; *C22F 1/10*(2006.01)i; *C22F 1/16*(2006.01)i

FI: C22C38/00 301Z; C22C19/05 F; C22C38/38; C22C38/60; C22C30/00; C22C30/02; B21C37/06 B; C21D9/08 E; C22F1/00 612; C22F1/00 626; C22F1/00 627; C22F1/00 630C; C22F1/00 630K; C22F1/00 640A; C22F1/00 641A; C22F1/00 683; C22F1/00 684C; C22F1/00 685Z; C22F1/00 691B; C22F1/00 691C; C22F1/10 H; C22F1/16 Z; C22C38/00 302Z

According to International Patent Classification (IPC) or to both national classification and IPC

| B. | FIELDS SEARCHED |
|---|---|

Minimum documentation searched (classification system followed by classification symbols)

C22C38/00-38/60; B21C37/06; C21D9/08; C22C19/05; C22C30/00; C22C30/02; C22F1/00; C22F1/10; C22F1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2013/118585 A1 (NIPPON STEEL & SUMITOMO METAL CORPORATION) 15 August 2013 (2013-08-15)<br>entire text, all drawings | 1-9 |
| A | WO 2022/102183 A1 (NIPPON STEEL CORPORATION) 19 May 2022 (2022-05-19)<br>entire text | 1-9 |
| A | WO 2018/047723 A1 (JFE STEEL CORPORATION) 15 March 2018 (2018-03-15)<br>entire text | 1-9 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011266**

| Patent document cited in search report | | | Publication date (day/month/year) | Patent family member(s) | | | Publication date (day/month/year) |
|---|---|---|---|---|---|---|---|
| WO | 2013/118585 | A1 | 15 August 2013 | EP | 2813594 | A1 | |
| | | | | entire text, all drawings | | | |
| | | | | CN | 104114730 | A | |
| | | | | KR | 10-2014-0127849 | A | |
| | | | | JP | 2013-159840 | A | |
| WO | 2022/102183 | A1 | 19 May 2022 | EP | 4245874 | A1 | |
| | | | | entire text | | | |
| | | | | CN | 116507750 | A | |
| | | | | KR | 10-2023-0106174 | A | |
| WO | 2018/047723 | A1 | 15 March 2018 | US | 2019/0184437 | A1 | |
| | | | | entire text | | | |
| | | | | EP | 3511082 | A1 | |
| | | | | CN | 109689240 | A | |
| | | | | KR | 10-2019-0053891 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006272392 A